(19) Europäisches Patentamt

European Patent Office

Office européen des brevets

(11) **EP 0 799 087 B1**

## (12) EUROPEAN PATENT SPECIFICATION

(45) Date of publication and mention
of the grant of the patent:
**08.05.2002 Bulletin 2002/19**

(21) Application number: **95944516.4**

(22) Date of filing: **22.12.1995**

(51) Int Cl.⁷: $B01D\ 69/00$, $B01D\ 71/00$

(86) International application number:
**PCT/US95/16777**

(87) International publication number:
**WO 96/20040 (04.07.1996 Gazette 1996/30)**

(54) **A STRONG WATER-PERMEABLE THIN COMPOSITE MEMBRANE**

STARKE WASSERDURCHLÄSSIGE DÜNNE KOMPOSITMEMBRAN

MEMBRANE COMPOSITE FINE ET RESISTANTE PERMEABLE A L'EAU

(84) Designated Contracting States:
**DE FR GB IT SE**

(30) Priority: **23.12.1994 US 370758**

(43) Date of publication of application:
**08.10.1997 Bulletin 1997/41**

(73) Proprietor: **Gore Enterprise Holdings, Inc.
Newark, DE 19714-9206 (US)**

(72) Inventors:
• **MISH, Stanley, L.
Flagstaff, AZ 86004 (US)**
• **DRUMHELLER, Paul, D.
Flagstaff, AZ 86001 (US)**

(74) Representative: **McCallum, William Potter et al
Cruikshank & Fairweather
19 Royal Exchange Square
Glasgow G1 3AE Scotland (GB)**

(56) References cited:
| | |
|---|---|
| **EP-A- 0 266 204** | **EP-A- 0 273 724** |
| **EP-A- 0 408 378** | **US-A- 4 613 544** |
| **US-A- 5 026 591** | **US-A- 5 082 472** |
| **US-A- 5 240 615** | |

## Description

FIELD OF THE INTVENTION

This invention relates generally to composite membranes and is directed more particularly to strong water-permeable thin composite membranes made of a microporous polymeric film component having continuous passages traversing the film wherein the passages are impregnated with a hydrogel material component to form the composite membrane.

BACKGROUND OF THE INVENTION

Composite membranes made of hydrophilic and hydrophobic components have been described for a variety of applications and have been produced by numerous processes. The usual result of such a combination is to give one material a property it does not possess by itself. For example, a hydrophobic microporous polymeric film can be rendered permselective, or selectively permeable, by placing a hydrophilic substance such as a hydrogel entirely, or partly, in the void spaces of the microporous film. Such a composite membrane can be impermeable to water, for example, while remaining permeable to water vapor or dissolved gases. This type of composite membrane is often used in the textile industry in combination with a layer of substrate fabric to produce a strong, waterproof, and breathable fabric. Representative examples of these composites are disclosed in the following U.S. Patents: U.S.-A-4,539,256, issued to Shipman; U.S. -A-4,613,544, issued to Burleigh; U.S. -A-4,961,985. issued to Henn et al.; and U.S.-A-5,026,591, issued to Henn et al.

Permselective composite membranes are also used in the medical field. For example, M.E. Dillon, in "Microporous Polytetrafluoroethylene and Polydimethylsiloxane IPN Membrane," Polym. Mater. Sci. Eng. v62 (1990), describes a composite membrane made of expanded polytetrafluoroethylene impregnated with polydimethylsiloxane for use in a transdermal drug delivery device. A composite membrane of the type described by Dillon is also useful as a breathable wound dressing.

In another example, permselective composite membranes can be made to be permeable to water and aqueous biological substances up to a desired molecular weight limit while being impermeable to cells and aqueous biological substances above the desired molecular weight limit. This type of membrane is often referred to as an immunoisolation membrane. Immunoisolation membranes are primarily used in cell encapsulation devices. An example of a cell encapsulation device made of a polyester fiber mesh-reinforced polyvinyl alcohol composite tube is described by K. Inoue et al. in "Experimental Hybrid Islet Transplantation: Application of Polyvinyl Alcohol Membrane for Entrapment of Islets," Pancreas, vol. 7, no. 5, p 562-568 (1992). The encapsulation device is used to contain isolated rat pancreatic islets in an attempt to make a bioartificial endocrine pancreas that will provide normoglycemia to subjects suffering from type I diabetes mellitus.

Though composite membranes made of a hydrophobic component and a hydrophilic component are known, a strong water-permeable thin composite membrane of the present invention has not heretofore been described.

US-A-5,026,591 relates to a coated product comprised of a substrate and a coating comprised of a microporous scaffold having a high void volume and of open, interconnecting microstructure, the void being substantially filled with a chemical substance. The coating can be used by itself, or it can be usefully affixed to a wide variety of substances. A method of making such products is also disclosed.

US -A-4,613,544 relates to a waterproof, moisture-vapour permeable unitary sheet material which comprises a microporous polymeric matrix having pores comprising continuous passages extending through its thickness and open to the opposite surfaces thereof, the passages being sufficiently filled with a moisture-vapour permeable, water impermeable, hydrophilic material to prevent the passage of water and other liquids through the unitary sheet material while readily permitting moisture vapour transmission therethrough rendering the sheet material breathable. The unitary sheet is made by causing a liquid composition comprising the hydrophilic material or precursor thereof to flow into the pores of the matrix, then causing the conversion thereof to solid hydrophilic material.

US-A-5,082,472 relates to a dimensionally stable, composite membrane of a microporous filament in laminar contact with a continuous perfluoro ion exchange resin layer. The composite membrane comprises a continuous perfluoro ion exchange polymer layer which has an original, as-prepared length, width and thickness, the ion exchange polymer layer being in laminar attachment to a film of a microporous material, preferably porous, expanded polytetrafluoroethylene, the microporous filament having essentially the same length and width as the as-prepared continuous perfluoro ion exchange.

EP-A-0408378 relates to a hydrophilic, semipermeable membrane comprising a porous polytetrafluoroethylene membrane having the internal and external surfaces of the membrane structure coated by a complex form by the combination of a hydrophilic polymer which adheres to the membrane structure and the complexing agent, the complex rendering the porous PTFE membrane substantially hydrophilic and protein affinitive.

EP-A-0266204 relates to a pressure-dependent anisotropic transport membrane system provided by a size selective separation membrane system comprising at least two successive porous layers. The first layer comprises a soft, elastic, effectively porous material, and the second layer comprises a rigid porous material.

When positive pressure presses the first layer against the second layer, the second layer serves as a rigid support for the first layer and the first layer is compressible to reduce its effective pore size.

## SUMMARY OF THE INVENTION

According to a first aspect of the present invention there is provided a strong water-permeable hydrogel membrane made by the following process, the process comprising:

> providing a water-permeable hydrogel precursor material comprising partially hydrolysed polyacrylonitrile;
> dissolving the hydrogel precursor in a solvent selected from the group consisting of dimethyl sulfoxide, dimethyl formamide, an aqueous solution of sodium thiocyanate, an aqueous solution of quaternary ammonium salts, lithium bromide, aluminium perchlorate, an aqueous solution of heavy metal chloride salts, or an acid solution of 75% sulfuric acid/25% nitric acid;
> filling a microporous polymeric film reinforcing material wherein the polymeric reinforcing material having a thickness of 1 micron to 100 microns has a void volume ranging from 40% to 85% and continuous passages traversing its thickness and opening onto both sides thereof with dissolved hydrogel precursor material such that the hydrogel precursor material substantially impregnates the porous polymeric reinforcing material;
> replacing the solvent for the hydrogel precursor material with a swelling solvent for the hydrogel precursor material;
> thereby forming an immobilised composite interpenetrating network hydrogel component within passages of the porous polymeric reinforcing material.

Another object of the present invention is to provide a strong water-permeable thin composite membrane having dimensional stability and tensile strength in multiple directions.

A further object of the present invention is to provide a strong water-permeable thin composite membrane that is selectively permeable and functions as an immunoisolation membrane.

## BRIEF DESCRIPTION OF THE DRAWINGS

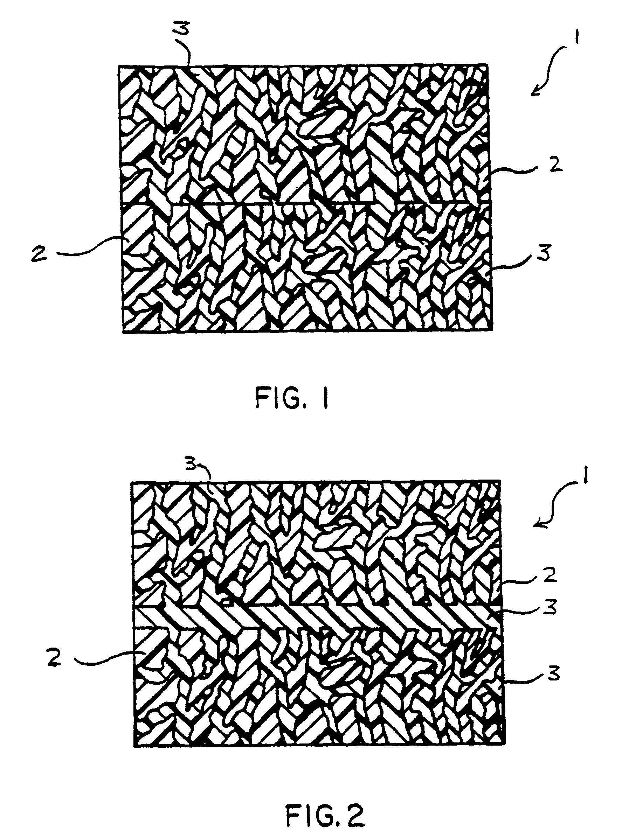

> Figure 1 is a representation of a composite membrane of the present invention (1) having two layers of a microporous polymeric film component (2) laminated together and the passages thereof impregnated with a hydrogel component (3).

Figure 2 is a representation of a composite membrane of the present invention (1) having two layers of a microporous polymeric film component (2) laminated together and the passages thereof impregnated with a hydrogel component (3), wherein the layers of the laminate are laminated together with the hydrogel component (3).

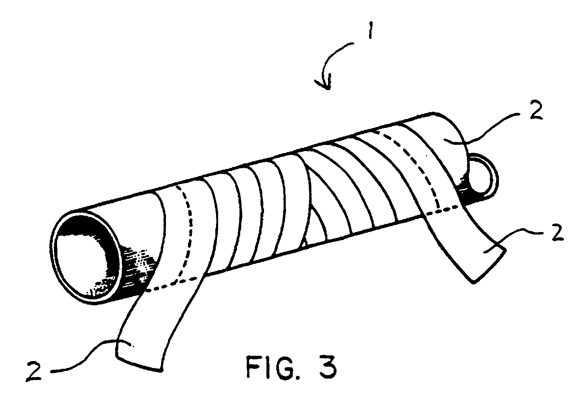

Figure 3 is a representation of a lamination scheme for a composite membrane of the present invention (1) using three layers of a microporous polymeric film component (2).

## DETAILED DESCRIPTION OF THE INVENTION

The present invention is directed to strong water-permeable thin composite membranes comprised of a microporous polymeric film component and a hydrogel material component. The microporous polymeric film component functions primarily to provide mechanical support to the hydrogel material component. The microporous film component also functions to filter large molecular weight solutes and cells. Preferably, the microporous polymeric film component is in the form of a laminate of two or more layers of film oriented in different directions. The microporous polymeric film component has void spaces impregnated with the hydrogel material component to form an interpenetrating network therewith. The hydrogel material component provides a means whereby movement of water, aqueous fluids, and aqueous solutes through the composite membrane is controlled. Permeable composite membranes of the present invention have a thickness less than about 100 microns, preferably less than about 50 microns, and more preferably less than about 5 microns.

To form a composite membrane of the present invention, a microporous polymeric film component is first obtained. One such membrane, having a thickness of about 1 micron, is a porous expanded film available from W.L. Gore & Associates, Inc., Elkton, MD. The microporous polymeric film component has a void volume greater than about 40%, preferably greater than about 75%, and most preferably greater than about 85%, as measured by comparing the apparent bulk density of the microporous film with a full density, or non-porous, film. The void volume is primarily comprised of passages, pores, or spaces coursing through the film. The void volume is related to the porosity of the microporous polymeric film. The porosity value represents the space in the microporous film that does not contain material, is empty. or is comprised of pores. Expressed as a percentage, the porosity value measures the percent (%) volume of the microporous film that is not occupied by the polymeric material constituting the solid phase of the microporous material. To derive the porosity value, in percent, for microporous polymeric film, the following formula is generally used:

$$Porosity = 100(1-(\rho_a/\rho_f))$$

where;

$\rho_f$ is the density of the polymer material constituting the solid phase of the microporous material, and $\rho_a$ is the apparent density of the microporous film component given by the volume occupied by the outer boundary of a representative sample of the microporous material divided by the mass of that material as determined by weighing the material at standard atmospheric conditions. The porosity value is determined for microporous polymeric films, wherein the void space is empty, i.e. has not been filled with any other liquid or solid impregnating material. Conversely, if the microporous polymeric film has been so impregnated, the impregnating material may be removed in any suitable fashion that does not remove any material from which the microporous polymeric film is comprised and does not affect the bulk volume of the microporous polymeric film, yet entirely removes the impregnating material.

The passages range in diameter, or minimum dimension, orthogonal to the direction of solute flow through the pore from about 0.02 μm (0.02 microns) to about 100 μm (100 microns). Alternatively, the diameter of a pore can be determined by the largest spherical particle that can pass through the pore. The passages often interconnect within the film. Passages that traverse the thickness of the film and open onto both surfaces of the film form continuous passages through the film. Use herein of the term "passages" in reference to a microporous polymeric film is understood to include both continuous and non-continuous passages in a particular microporous polymeric film.

The microporous polymeric film component of the composite membrane of the present invention has a thickness ranging from less than about 1μm (1.0 micron) to about 100 μm (100 microns). Preferably, the microporous polymeric film component has a thickness relative to the thickness of the hydrogel material component of between about 10% and about 1000%. More preferably, the thickness of the microporous polymeric film component relative to the thickness of the hydrogel component is from about 50% to about 150%. Most preferably, the thickness of the microporous polymeric film component relative to the thickness of the hydrogel component is about 100%.

Examples of microporous polymeric film materials that are suitable for use in the present invention include, but are not limited to. expanded polytetrafluoroethylene (ePTFE); woven/and or non-woven polymers such as polyester, polyethylene terephthalate, polyamide, polypropylene, polyethylene, polyacrylonitrile, polyaramid, polyhydroxy acids such as polylactic acid, polyglycolic acid, or polycaprolactone; open cellular foams such as phenolic and epoxy resins. polyurethanes, chloroprene, isoprene, polyethylene, polypropylene, polystyrene, polyvinyl chloride, latex foam rubber, polyureaformaldehyde, polyhydroxy acids such as polylactic acid, polyglycolic acid, polyhydroxybutyric acid, polyhydroxyvaleric acid, or polycapralactone; and poromerics and/or permeable matrix membranes such as polyvinyls, polyamide, polyimide, polyacrylonitrile, polysulfone. polyvinylidene fluoride, polypropylene, polymethylmethacrylate, polycarbonate, regenerated cellulose, or cellulose acetate. The preferred microporous polymeric film material is ePTFE. ePTFE is characterized primarily by a multiplicity of open, interconnecting voids defined by nodes and fibrils, high tensile strength, resistance to biological fouling. and stable chemical properties. ePTFE materials, including ePTFE films, may be made according to the teachings of U.S. -A- 3,953,566 and 4,187,390, both issued to Gore. ePTFE films suitable for use in the present invention can have fibrils oriented primarily in a single direction, in two directions, or in more than one direction. These films are commonly referred to as uniaxially, biaxially, or multiaxially oriented materials, respectively.

In the next step in forming a composite membrane, a hydrogel material component is substantially impregnated within the passages of a microporous polymeric film component. A microporous polymeric film component having passages substantially impregnated with a hydrogel material component prevents large molecular weight solutes (e.g. about 2.0 x 10⁶ Da) from passing across and through the composite membrane. A microporous polymeric film component having passages filled from about 80% to about 100% with a hydrogel material is considered to be substantially impregnated with the hydrogel material. A microporous polymeric film component having passages filled to 100% with a hydrogel material may also have additional hydrogel material on the surface of the film component and still be considered to be substantially impregnated with a hydrogel material. Alternatively, the passages of a microporous polymeric film component may have a hydrogel material component contained within the film, but below the surface of the film and still be considered to be substantially impregnated with a hydrogel material.

As used herein, the combination of a network of a hydrogel material component formed within the passages of a microporous polymeric film component is termed a composite interpenetrating network. A composite interpenetrating network is a network made of a fully formed first network material impregnated with precursors of a second network material that combine to form a network of a second network material within the void spaces of the fully formed first network. The second network material can completely fill the void spaces of the first network material. Alternatively, the second network material can fill the first network material to a depth less than the thickness of the first network material. The second network material can also be placed within a particular region of the first network material, such as the central region, provided the second network material is continuous through the region.

In a preferred embodiment, a composite interpenetrating network is formed by impregnating the passages of a microporous polymeric film component with a solution of precursors of a hydrogel material component. Once the passages are substantially impregnated with the solution of hydrogel precursors, the solvent for the hydrogel polymers may be replaced with a swelling solvent. The hydrogel polymers then partially precipitate and partially solvates to form an immobilized hydrogel material component within the passages of the polymeric film component. The immobilized hydrogel material component is highly resistant to extraction, leaching, or otherwise diffusing from the passages of the polymeric film component. This is of particular utility in medical applications where loss of unimmobilized hydrogel material from a membrane could be detrimental to the permselective performance of the composite membrane.

A microporous polymeric film component having virtually all of its passages filled with a hydrogel material component to form a composite interpenetrating network therewith has an effectively reduced pore size conferred on it by the hydrogel material. The reduced pore size of the hydrogel material component permits the permeability of the composite membrane to water and water soluble substances to be controlled.

Hydrogel materials suitable for use in the present invention are generally characterized as either a thermoplast hydrogel material, a coacervate hydrogel material, or a thermoset hydrogel material.

Thermoplast hydrogel materials are composed of precursors that have a general structure comprised of a water soluble moiety and a water insoluble moiety. Examples of thermoplast hydrogel precursors suitable for use in the present invention include, but are not limited to, heterochain hydrogels such as sulfonated polysulfone, partially hydrolyzed polyacrylonitrile (HYPAN® Structural Hydrogels, Hymedix, Inc., Dayton, NJ), polyether-urethane, polyether-urethaneurea, or any hydrophilic-hydrophobic multiblock copolymer wherein the hydrophobic segments may form a stable water-insoluble thermoplast and the hydrophilic segment may substantially swell in aqueous solvent without solubilizing the water-insoluble thermoplast, such as polyetherstyrene or polyvinylpyrrolidone-vinyl acetate; and homochain hydrogels such as polyvinyl alcohol, colloidal povidone, or hydroxylated acrylates such as hydroxyethyl acrylate or hydroxyethyl methacrylate. HYPAN® Structural Hydrogel is the preferred hydrogel material for use in the present invention.

To form a composite interpenetrating network using a thermoplast hydrogel material component and a microporous polymeric film component, the polymeric film is immersed in a solution containing dissolved hydrogel material and allowed to imbibe the solution into the passages of the film thereby substantially filling the passages with the solution of hydrogel polymers. A microporous polymeric film component wherein the passages are substantially filled with hydrogel precursors is one in which the hydrogel material, when swollen, will occupy from about 80% to about 100% of the available volume of the passages of the microporous polymeric film component. Precursors of a thermoplast hydrogel, such as polyacrylonitrile-*b*-acrylamide polymer (HYPAN® Structural Hydrogel, Hymedix, Inc., Dayton, NJ), for example, are dissolved in a compatible solvent, such as dimethyl sulfoxide (DMSO), dimethyl formamide (DMF), an aqueous solution of quaternary ammonium salts, lithium bromide, or aluminum perchlorate, each at a concentration of about 65-75% weight/volume, an aqueous solution of heavy metal chloride salts, such as zinc chloride at a concentration of about 55% weight/volume, an acid solution of about 75% sulfuric acid/nitric acid, or an aqueous solution of sodium thiocyanate at a concentration of about 55% weight/volume, for example. Once the passages of the microporous film component have been substantially filled with a solution of thermoplast hydrogel precursors, the compatible solvent in which the hydrogel precursors are dissolved is removed by displacing the compatible solvent with another miscible solvent known in the art as a swelling solvent. A swelling solvent is one that solvates the water soluble moiety of the hydrogel material component, but not the water insoluble moiety. In addition, a miscible swelling solvent should not disrupt hydrophobic crystalline domains in the hydrogel material component either during or after formation of the material in the passages of the microporous polymeric film component. Examples of miscible swelling solvents include, but are not limited to, water, saline, glycerol. or aqueous biological solutions. Once the hydrogel compatible solvent has been displaced by the swelling solvent. the hydrogel precursors associate to form a hydrogel material component swollen with the swelling solvent . The hydrogel material component does not dissolve in the water.

Formation of a thermoplast hydrogel material component within the passages of the polymeric film results in a semi-crystalline structure characterized primarily by alternating hydrophobic crystalline and hydrophilic amorphous domains. A crystalline domain of a hydrogel material component results when all or nearly all of the water insoluble blocks of the hydrogel precursors are coupled together with non-covalent bonds such as hydrogen bonds, hydrophobic interaction, aromatic stacking, ionic bonds, dipole-dipole interaction, etc. An amorphous domain of a swollen hydrogel material component is formed when most of the water soluble blocks of the hydrogel precursors are solvated. Therefore, in the presence of a swelling solvent, such as water, the water insoluble blocks of the hydrogel precursors associate to form crystalline structures and the water soluble blocks of the hydrogel precursors become solvated.

Coacervate hydrogel materials used in the pri-

or art are polyelectrolyte complexes with ionizable groups of opposite charge on polymer chains, wherein each individual polyelectrolyte is substantially water soluble. An example of a coacervate polymer pair hydrogel material includes, but is not limited to, polyacrylic acid/ polyethyleneimine. polyaspartic acid/polylysine, or polyelectrolytes ionically cross-linked with polyvalent ions, such as alginic acid/calcium.

To form a composite interpenetrating network using a coacervate hydrogel material component and a microporous polymeric film component, for example, an ePTFE film is prewetted with ethanol and then immersed in a solution of 2% sodium alginate (medium viscosity) for about two to twenty-four hours. Excess sodium alginate is removed and the final hydrogel material obtained by immersing the ePTFE/sodium alginate impregnated film in a solution of 2% calcium chloride. Preferably, the resulting ionically cross-linked hydrogel material completely fills the pores of the ePTFE film.

If about 1% to about 100% of the hydrogel precursors are comprised of covalently cross-linkable blocks, the hydrogel precursors are considered to be cross-linkable to form a thermoset hydrogel material component. The hydrogel precursors may be covalently cross-linked using a number of methods. For example, hydrogels containing multiple hydroxyl, or amine, etc. moieties may be cross-linked by adding to diisocyanates, triisocyanates, diepoxides, dialdehydes, diacyl halides, etc. to the hydrogel precursors. Hydrogel precursors containing multiple vinyl unsaturations may be cross-linked via free radical addition or plasma irradiation. Hydrogel precursors containing alkyl hydrogens may be cross-linked via electron or gamma ray irradiation.

Regardless of which hydrogel material component is used in the present invention, a preferred method of forming a composite interpenetrating network in the present invention is to immerse a microporous polymeric film component in a solution of oligomeric precursors of a hydrogel material component and allowing the solution of oligomeric precursors to be imbided into the passages of the polymeric film by diffusion or by infusion under pressure, thereby filling the passages with oligomeric precursors of the hydrogel material component. The compatible solvent for the oligomeric precursors is displaced with a swelling solvent. Depending on which oligomeric precursors are used, the precursors are either partially coupled or cross-linked *in situ* within the passages of the polymeric film to form a network of hydrogel material therein. A composite interpenetrating network of the hydrogel material component and the microporous polymeric film component is the result of coupling or cross-linking of the oligomeric hydrogel precursors *in situ*.

In general, the microporous polymeric film component usually has greater tensile strength and dimensional stability than the hydrogel material component of a composite membrane of the present invention. The microporous polymeric film component is stronger than the hydrogel material component, the film provides reinforcement to the composite membrane. The tensile strength and dimensional stability of the composite membrane can be varied by incorporating one or more fabrication techniques known to produce thin, high tensile strength reinforcing films. These techniques include, but are not limited to, weaving or knitting of filaments, web drawing of porous films, and lamination, for example.

A composite membrane of the present invention is able to be configured in a variety of useful shapes, including, but not limited to, tubes, planar sheets, and capsules, for example. Lamination of the microporous polymeric film component of the present invention is a preferred method for producing a variety of shapes. For example, thin, highly oriented fibers or bands of microporous polymeric film can be laminated to create surfaces of varying curvature and flexibility.

A composite membrane of the present invention can be produced that exhibits tensile strength in several planar directions. For example. the tensile strength of an ePTFE film component is commonly greatest in the principal direction of orientation of that film. Such oriented films generally exhibit less tensile strength in a direction orthogonal to the direction of principal orientation of such film, and are thus advantageously placed in a structural composite such that the principal direction of orientation of such film is aligned with the direction of anticipated primary loading. To produce microporous polymeric reinforcing films which feature tensile strength in multiple directions, lamination of two or more layers is accomplished with the film layers oriented in a distributed set of directions. A common two ply lamination would involve lamination of a second layer at a 90° angle (orthogonal) orientation to a first layer. This results in a laminate denoted a 0, 90 laminate. Other common lamination schemes include a three ply lamination such as a 0, 45, 90 laminate or a 0, 60, 120 laminate. A four ply lamination scheme might include a 0, 45, 90, 135 laminate, for example. Such multidirectional lamination schemes resul in more distributed mechanical properties and less specific orientation in the final product. Alternatively, biaxially oriented or multiaxially oriented films may be used in the present invention, either alone or in multiple layers.

The tensile strength of a hydrogel material component, such as a hydrogel film, can be greatly enhanced by the use of a microporous polymeric film component that functions as a reinforcing layer. Typical tensile strengths of hydrogel films rarely exceed 6.9 MPa (1000 psi), while the tensile strength of a commonly available ePTFE reinforcing film of 90% porosity is around 69 MPa (10,000 psi). For example, a typical high performance structural hydrogel with a tensile strength of 3.4 MPa (500 psi) would exhibit greatly increased tensile tensile strength by the addition of unidirectionally oriented layers of ePTFE reinforcing film. A typical film of 69 MPa (10,000 psi) tensile strength and 90% porosity, as determined using 2.2g/cm$^3$ as $\rho_f$ in the above-described porosity equation, would increase the tensile strength of the hydrogel by a factor of 20, while having only a small effect on the permeability of the composite membrane.

Tensile strength values of these porous materials may also be considered in terms of matrix tensile strength (MTS) values, which compensate for the porosity within the bulk volume of the film. MTS values are determined as taught by Gore in U.S-A-3,953,566 and 4,187,390, both of which are incorporated herein by reference, with a strain rate of 2.62%/sec. Films useful in the present invention have MTS values greater than about 69 MPa (10,000 psi), preferably from about 345 MPa (50,000 psi) to about 828 MPa (120,000 psi).

A combination of the two materials into a composite film results in slightly reduced permeability as compared to the unreinforced hydrogel. The reduced permeability is primarily due to the small amount of essentially impermeable ePTFE present in the composite. Yet the composite membrane has greatly increased tensile tensile strength. The tensile strength of such a composite membrane is approximately equal to the tensile strength of the ePTFE reinforcing film component.

The tensile strength imparted by the reinforcing film may be applied in one principal direction, or the tensile strength of the composite can be tailored to provide tensile strength in two or more planar directions through the use of multidirectional laminations of the oriented reinforcing films. In the case of a laminate composed of layers oriented in two orthogonal directions, the tensile strength of the resulting composite in one of the orthogonal directions will not benefit to a maximum degree from the presence of the reinforcing layers which are not oriented in the direction of load. Such multidirectional laminations result in a product which is not optimized for tensile strength in one direction, but which has tensile strength in many directions. The tensile strength of the resulting multidirectional laminate can be approximated by summing the tensile strength of the layers which are oriented in the direction of loading, although the actual tensile strength may be somewhat higher due to the non-zero tensile strength contribution of the other non-principally oriented reinforcing layers. For example, if a hydrogel component of about 3.4 MPa (500 psi) and a reinforcing film component of 69 MPa (10,000 psi) are combined in a multidirectional laminate such that two orthogonal directions of reinforcement are equally provided by alternating layers of ePTFE film. the resulting composite membrane features an increase in tensile strength over the unreinforced hydrogel by a factor of 10.

The stiffness of composite membranes of the present invention is enhanced by the microporous polymeric film component. Typical high tensile strength hydrogels exhibit rubbery mechanical behavior which results in little resistance to deformation, requiring deformations of about 250% to about 1000% of their original size in order to provide maximal resistance to the applied loads. Such low resistance to deformation is undesirable in products which must maintain shape or dimensions for proper function. The microporous polymeric film component provides a significant improvement in stiffness, providing maximum resistance to applied loads at deformations ranging from about 2% to about 20%. In applications wherein the performance of the composite membrane of the present invention is defined by resistance to relatively small deformations (i.e. strain value such as about 10%), the beneficial effect of reinforcing the composite membrane with a microporous polymeric film can provide a further large degree of improvement over an unreinforced hydrogel material component. For example, in an application where the failure of the device is defined by deformation strain of 10%, the above-mentioned hydrogel component will have a tensile strength which is effectively 4% of its maximum tensile strength of about 3.4 MPa (500 psi). In this case, the above-mentioned reinforcing layer, which achieves maximum tensile strength of about 69 MPa (10,000 psi) at about 10% deformation, results in a composite membrane that is effectively 400 times stronger than the unreinforced product.

The effect of the reinforcing layers of microporous polymeric film on the permeability of the resulting composite membrane will generally be relatively small. Typical reinforcing materials have poor solubility to some or all of the aqueous solutes which pass readily through the water phase of a typical hydrogel. A composite membrane of the present invention, uniformly combined with an ePTFE reinforcing film component of about 90% porosity will exhibit an attenuation of permeability in excess of about 10% over a similar unreinforced hydrogel. The degree to which the permeability is attenuated is due in part to the reduction of area available for transport due to the presence of impermeable reinforcing material, and in part to the amount which the average water phase transport path through the thickness of the membrane exceeds the composite membrane thickness. The effect of the decrease in permeability of a reinforced product over an unreinforced product can be readily negated by producing a final composite membrane of sufficiently reduced thickness. For example, if it is found that the effect of the 90% porosity reinforcing film causes a net permeability reduction of 50% over the unreinforced product, the thickness of the composite product can be modified by the removal of material, such that the thickness of this new product is half of that exhibited by an unmodified composite membrane. For example, the resulting permeability of the modified membrane constructed of the aforementioned structural hydrogel and ePTFE reinforcing film layer is improved to the degree that it is equivalent to the unreinforced product, while resulting in a tensile strength that still exceeds the tensile strength of that unreinforced product.

Lamination is understood to refer to the assembly of two or more microporous polymeric film layers into close approximation such that the surface of one layer is nearby and in parallel orientation with the surface of the other layer. The surface of a polymeric film layer is considered to be nearby the surface of an adjacent parallel film layer if it is within ten times the nominal film unit thickness of the microporous polymeric film comprising the laminate. Lamination of microporous polymeric films can be performed using the microporous polymeric film alone or in combination with an adhesive.

Laminations performed with the microporous polymeric film alone may be bonded with heat or a solvent. The result is a microporous polymeric film laminate bound to the adjacent film layer by homogeneous interaction. Homogeneous interactions are understood to include, but not be limited to, the creation of crystalline binding domains, glassy amorphous domains, ionic bonds, hydrogen bonds, or covalent cross-links.

Alternatively, an adhesive may be used to bind adjacent layers of a microporous polymeric film together, provided that the effect of the adhesive is substantially limited to the creation of fastening domains between the film layers and does not cause excessive fouling of the laminated film. Excessive fouling of the laminated film results when more than about 70% of the available continuous passages in the microporous polymeric film are occluded. Suitable adhesives for use in the present invention include, but are not limited to, polyurethane, polyester, and fluorinated ethylene propylene, polyurea, polycarbonate, and polyepoxides, either alone or in combination. In a preferred embodiment, the layers of a polymeric film laminate are adhered together with the hydrogel material used to form the hydrogel component of the interpenetrating network of the composite membrane of the present invention. The hydrogel material component can provide lamination tensile strength by adhering the layers of microporous film together, even when the hydrogel is fully swollen.

EXAMPLES

Example 1

A composite membrane of the present invention was constructed in the form of a tube having a microporous polymeric film component comprised of multiple layers of oriented expanded polytetrafluoroethylene (ePTFE) film laminated together in multiple directions, relative to the principal axis of orientation of each ePTFE film layer, and a hydrogel component known under the trademark HYPAN® Structural Hydrogels, from Hymedix, Inc., Dayton, New Jersey, catalog no. HYPAN HN86.

ePTFE film, made as taught in U.S-A-3,953,566 and 4,187,390, both issued to Gore, each of which is incorporated herein by reference, was used to make a laminated tube approximately 10 cm in length.

This microporous film was expanded in a single direction to form fibrils oriented primarily in the direction of expansion to produce an axially oriented film. This film was characterized by tensile strength of 69 MPa (10,000 psi), porosity of about 90%, based on a full density of PTFE of 2.2 g/cm$^3$ a width of about 13.0 mm, and a thickness of about 13 μm (13.0 microns), as determined with a laser micrometer. The first of five film layers was applied to a 20 mm mandrel with the fibrils of the film oriented longitudinally with respect to the axis of the composite membrane. The second and third layers of film were wrapped on the first layer of film at approximately a 60° angle with respect to the first layer of film. A fourth and fifth layer of film was wrapped on the previous layers of film at approximately a 120° angle with respect to the first layer of film. Each successively wrapped layer of film overlapped itself by approximately 50% and resulted in two layers of film being added to the laminate. The construction was heat bonded in an air convection oven set at 380°C for approximately 5 minutes.

The passages of the five layer ePTFE laminated film component were first wetted with dimethylsulfoxide (DMSO) and then impregnated with hydrogel precursors. As small amount, i.e. approximately 0.5 ml. of HYPAN HN86 dissolved in DMSO at a concentration of approximately 10% polymer (w/v) was forced into the passages of the film laminate by rubbing the HN86/DMSO solution into the tube wall.

The HYPAN HN86 precursors were then coagulated in the passages of the ePTFE laminate to form a hydrogel network therein. The hydrogel precursors were coagulated by immersing the tube in water at room temperature for approximately 15 minutes.

The resultant composite membrane was strong in all directions, retained its shape well, and was capable of ultrafiltrating at least 2 X 10$^6$ Da dextran solutes.

Example 2

A composite membrane similar to the membrane described in Example 1 was made using a thin, highly oriented, porous ePTFE film which had a thin discontinuous layer of fluorinated ethylene propylene (FEP) on one side of the film. The FEP functions as an adhesive to attach the layers of ePTFE together in the laminate.

The FEP-coated ePTFE film was made by a process which comprises the steps of:

a) contacting a porous PTFE substrate, usually in the form of a membrane or film, with another layer which is preferably a film of FEP or alternatively another thermoplastic polymer;

b) heating the composition obtained in step a) to a temperature above the melting point of the thermoplastic polymer;

c) stretching the heated composition of step b) while maintaining the temperature above the melting point of the thermoplastic polymer; and

d) cooling the product of step c).

In addition to FEP, other thermoplastic polymers including thermoplastic fluoropolymers may also be used to make this coated film. The adhesive coating on the ePTFE film may be either continuous (non-porous) or discontinuous (porous) depending primarily on the amount and rate of stretching, the temperature during stretching, and the thickness of adhesive prior to stretching. Only porous adhesive coatings of FEP are suitable for the present invention. The laminated tube used as the film component in this example had a total thickness of about 0.025 mm and a diameter of about 3.2 mm.

In this example, a five layer tube approximately 10 cm in length having a 3.2mm inner diameter was made with the above-described FEP coated ePTFE film as the lamination film. Impregnation of the film with HYPAN HN86 was performed as described in Example 1. Coagulation of the hydrogel precursors was also performed as described in Example 1.

The diffusion permeability coefficient was measured for the resultant composite membrane. Using a stirred bath apparatus, the permeability coefficient of the membrane was determined to be $1.35 \times 10^{-4}$ cm/sec. This value corresponds to diffusivity (D)=$3.4 \times 10^{-7}$ cm$^2$/sec or 3.5% of the diffusion of glucose in water at 37°C.

Example 3

A composite membrane of the present invention was made using a thermoplast hydrogel material. An ePTFE film of about 5 microns in thickness was first prewetted with ethanol. The film was then immersed in a solution of about 5-10% HYPAN® Structural Hydrogel, Hymedix, Inc., Dayton, New Jersey, catalog no. HYPAN HN 86, in a solution of sodium thiocyanate at a concentration of about 55% weight/volume for about 2-24 hours to allow the HYPAN® Structural Hydrogel polymer to diffuse into the ePTFE pores and to allow the solvent to displace any remaining traces of ethanol. DMSO or DMF are also suitable solvents the HYPAN® Structural Hydrogel. The impregnated ePTFE film was removed from the solution and excess surface polymer removed by blotting with a tissue. The hydrogel material component was formed in the void spaces of the ePTFE film by immersing the film in a swelling solvent of deionized water.

Example 4

A composite membrane similar to the membrane of Example 3 was made using a roller device to impregnate the ePTFE film with the hydrogel material component. The ePTFE film of Example 3 was placed on a roller device with the film passing to a nip. The ePTFE film was prewetted with ethanol. The HYPAN® Structural Hydrogel material was placed in solution as in Example 3 and dripped onto the ePTFE film prior to the film entering the nip. The nip provided a focal point where the hydrogel material was pressed into the void spaces of the ePTFE film. The film exiting the nip was immersed in deionized water to form the hydrogel material component in the void spaces of the ePTFE film component.

Comparative Example 1

A composite membrane made with a thermoset hydrogel material was prepared using free radical addition polymerization as follows. An ePTFE film of about 5 microns in thickness was prewetted with ethanol. The ePTFE film was then immersed in a solution of about 25-50% polyethylene glycol diacrylate (PEGDA) (MW = 3,400 g/mol) (Sherwater Polymers, Huntsville, AL 35801) in deoxygenated deionized water, containing 0.1-0.25% dimethoxyphenyl acetophenone, a UV catalyst, and 0.5% polyoxyethylene monolaurate, a suspension stabilizer, for about 2-24 hours. The film was then removed from the solution and excess polymer removed by blotting with a tissue. The impregnated film was then exposed to a UV light source of approximately 360 nm, at about 10mW/cm$^2$ for about 1-2 minutes. The resulting covalently cross-linked hydrogel completely filled the void spaces of the ePTFE film.

Example 5

Use of the hydrogel material component to attach two layers of ePTFE film together as a laminate is illustrated as follows. Each layer of ePTFE film was impregnated with HYPAN® Structural Hydrogel, catalog no. HYPAN HN 86. as per Example 3. One layer of impregnated film was placed over the other and subjected to about 14 kPa (2 psi) of pressure for abou 10 seconds. Excess polymer was removed by blotting the film laminate with a tissue. The laminate was then immersed in deionized water to obtain the hydrogel component immobilized within the passages, or void spaces, of the film. The resultant composite membrane had a total thickness of about 25 μm (25 microns). The peel tensile strength of the fully hydrated laminate was measured to be about 70-87.5 N/m (0.4-0.5 lbs/in).

Example 6

A composite membrane of the present invention was constructed and tested for pin holes as follows. A cylindrical wrap of ePTFE having a total thickness of about 25 μm (25 microns) was impregnated with HYPAN® Structural Hydrogel, catalog no. HYPAN HN86, as per Example 3, or polyethylene glycol diacrylate (PEGDA), as per Example 4. One end of each composite membrane-tube was cannulated and the other end sealed. To test the tubes for pin holes, a solution of about 0.5% blue dextran (MW = 2M g/mol) (Sigma Chemical Co.. St. Louis, MO) in deionized water was. forced into the lumen of the composite tube with a syringe. The results were as follow:

| Hydrogel material | Results |
|---|---|
| 5% HYPAN® HN 86 | Leakage of dye |
| 10% HYPAN® HN 86 | No leakage of dye |
| 25% PEGDA | Leakage of dye |
| 50% PEGDA | No leakage of dye |

## Claims

1. A strong water-permeable hydrogel membrane made by the following process, the process comprising:

   providing a water-permeable hydrogel precursor material comprising partially hydrolysed polyacrylonitrile;
   dissolving the hydrogel precursor in a solvent selected from the group consisting of dimethyl sulfoxide, dimethyl formamide, an aqueous solution of sodium thiocyanate, an aqueous solution of quaternary ammonium salts, lithium bromide, aluminium perchlorate, an aqueous solution of heavy metal chloride salts, or an acid solution of 75% sulfuric acid/25% nitric acid;
   filling a microporous polymeric film reinforcing material wherein the polymeric reinforcing material having a thickness of 1 micron to 100 microns has a void volume ranging from 40% to 85% and continuous passages traversing its thickness and opening onto both sides thereof with dissolved hydrogel precursor material such that the hydrogel precursor material substantially impregnates the porous polymeric reinforcing material;
   replacing the solvent for the hydrogel precursor material with a swelling solvent for the hydrogel precursor material;
   thereby forming an immobilised composite interpenetrating network hydrogel component within passages of the porous polymeric reinforcing material.

2. The hydrogel membrane of claim 1 wherein the polymeric reinforcing material is expanded porous polytetrafluoroethylene.

3. The hydrogel membrane according to any preceding claim wherein the hydrogel material also comprises any of the following: sulfonated polysulfone, partially hydrolysed polyacrylonitrile, polyether-urethane, polyether-urethaneurea, polyvinyl alcohol, hydroxyethyl arcylate, hydroxyethyl methacrylate, polyacrylic acid/polyethyleneimine, alginic acid/calcium, dextran, agarose alginate, and hyaluronic acid.

4. The hydrogel membrane as claimed in any preceding claim wherein the hydrogel precursor material is formed from oligomeric precursors.

5. A hydrogel membrane according to any preceding claim comprising:

   a water-permeable hydrogel material, wherein the hydrogel material comprises at least partially hydrolysed polyacrylonitrile;
   a porous expanded polytetrafluoroethylene reinforcing material having a thickness of 1 micron to 100 microns placed within the hydrogel material such that the hydrogel material has a thickness relative to the thickness of the porous expanded polytetrafluoroethylene reinforcing material of about 100% to about 1000% wherein the membrane has a matrix tensile strength of about 69 MPa to about 828 MPa (10,000 psi to about 120,000 psi).

6. The reinforced hydrogel material of any of claims 5 and 6 wherein the water-permeable hydrogel material also comprises any of the following:

   sulfonated polysulfone, polyether-urethane, polyether-urethaneurea, polyhydroxyethyl acrylate, polyhydoxyethyl methacrylate, polyacrylic acid/polyethyleneimine, dextran and hyaluronic acid.

## Patentansprüche

1. Starke wasserdurchlässige Hydrogel-Mernbran, hergestellt nach dem folgenden Verfahren, wobei das Verfahren aufweist:

   Bereitstellen eines wasserdurchlässigen Hydrogel-Vorläufermaterials, das teilweise hydrolysiertes Polyacrylnitril aufweist,

   Lösen des Hydrogel-Vorläufers in einem Lösungsmittel, das ausgewählt ist aus der Gruppe, die besteht aus Dimethylsulfoxid, Dimethylformamid, einer wässrigen Lösung von Natriumthiocyanat, einer wässrigen Lösung von quaternären Ammoniumsalzen, Lithiumbromid, Aluminiumperchlorat, einer wässrigen Lösung von Schwermetallchlorid—Salzen oder einer Säurelösung von 75% Schwefelsäure/ 25% Salpetersäure,

Füllen eines Verstärkungsmaterials aus mikroporösem polymeren Film, wobei das polymere Verstärkungsmaterial mit einer Dicke von 1 µm bis 100 µm ein Hohlraumvolumen im Bereich von 40% bis 85% und kontinuierliche Durchgänge, die seine Dicke durchqueren und sich nach seinen beiden Seiten öffnen, hat, dergestalt mit gelöstem Hydrogel—Vorläufermaterial, daß das Hydrogel-Vorläufermaterial das poröse polymere Verstärkungsmaterial im wesentlichen imprägniert,

Ersetzen des Lösungsmittels für das Hydrogel—Vorläufermaterial durch ein Quellungslösungsmittel für das Hydrogel—Vorläufermaterial,

dadurch Bilden einer immobilisierten Kompositdurchdringungsnetzwerk-Hydrogelkomponente innerhalb von Durchgängen des porösen polymeren Verstärkungsmaterials.

2. Hydrogel-Membran nach Anspruch 1, bei der das polymere Verstärkungsmaterial expandiertes poröses Polytetrafluorethylen ist.

3. Hydroget-Membran nach einem vorangehenden Anspruch, bei der das Hydrogelmaterial auch eine der folgenden Verbindungen aufweist: sulfoniertes Polysulfon, teilweise hydrolysiertes Polyacrylnitril, Polyether-urethan, Polyether-urethanharnstoff, Polyvinylalkohol, Hydroxyethyl-acrylat, Hydroxyethyl-methacrylat, Polyacrylsäure/Polyethylenimin, Alginsäure/Calcium, Dextran, Agarose-alginat und Hyaluronsäure.

4. Hydrogel-Membran nach einem vorangehenden Anspruch, bei der das Hydrogel—Vorläufermaterial von oligomeren Vorläufern gebildet wird.

5. Hydrogel—Membran nach einem vorangehenden Anspruch aufweisend:

ein wasserdurchlässiges Hydrogelmaterial, wobei das Hydrogelmaterial mindestens teilweise hydrolysiertes Polyacrylnitril aufweist,

ein Verstärkungsmaterial aus porösem expandierten Polytetrafluorethylen mit einer Dicke von 1 µm bis 100 µm, das dergestalt innerhalb des Hydrogelmaterials angeordnet ist, daß das Hydrogelmaterial eine Dicke relativ zur Dicke des Verstärkungsmaterials aus porösem expandierten Polytetrafluorethylen von etwa 100% bis etwa 1000% hat, wobei die Membran eine Matrix-Zugfestigkeit von etwa 69 MPa bis etwa 828 MPa (10.000 psi bis etwa 120.000 psi) hat.

6. Verstärktes Hydrogelmaterial nach Anspruch 5 oder 6, wobei das wasserdurchlässige Hydrogelmaterial auch eine der folgenden Verbindungen aufweist:

sulfoniertes Polysulfon, Polyether-urethan, Polyether-urethanharnstoff, Polyhydroxyethyl-acrylat, Polyhydroxyethyl-methacrylat, Polyacrylsäure/Polyethylenimin, Dextran und Hyaluronsäure.

## Revendications

1. Membrane d'hydrogel perméable à l'eau résistante préparée par le procédé suivant, ledit procédé consistant à :

fournir un matériau précurseur d'hydrogel perméable à l'eau comprenant un polyacrylonitrile partiellement hydrolyse ;
dissoudre le précurseur d'hydrogel dans un solvant choisi dans le groupe constitué du diméthylsulfoxyde, du diméthylformamide, d'une solution aqueuse de thiocyanate de sodium, d'une solution aqueuse de sels d'ammonium quaternaire, du bromure de lithium, du perchlorate d'aluminium, d'une solution aqueuse de sels chlorures de métaux lourds, ou d'une solution acide de 75% d'acide sulfurique/25% d'acide nitrique ;
remplir un matériau de renfort en film polymère microporeux dans lequel le matériau de renfort polymère ayant une épaisseur de 1 micromètre à 100 micromètres a un volume vide compris entre 40% et 85% et des passages continus traversant son épaisseur et s'ouvrant sur ses deux côtés, avec le matériau précurseur d'hydrogel dissous, de façon que le matériau précurseur d'hydrogel imprègne substantiellement le matériau de renfort polymère poreux ;
remplacer le solvant pour le matériau précurseur d'hydrogel par un solvant gonflant pour le matériau précurseur d'hydrogel ;
permettant ainsi de former dans les passages du matériau de renfort polymère poreux un composant hydrogel formant un réseau interpénétré composite immobilisé.

2. Membrane d'hydrogel de la revendication 1 dans laquelle le matériau de renfort polymère est un polytétrafluoroéthylène poreux expansé.

3. Membrane d'hydrogel selon l'une quelconque des revendications précédentes dans laquelle le matériau d'hydrogel comprend également l'un des composés suivants : polysulfone sulfonée, polyacrylonitrile partiellement hydrolysé, polyéther-uréthane, polyéther-uréthaneurée, alcool polyvinylique, acrylate d'hydroxyéthyle, méthacrylate d'hydroxyéthyle, acide polyacrylique/polyéthylèneimine, acide alginique/calcium, dextrane, alginate d'agarose, et acide hyaluronique.

4. Membrane d'hydrogel selon l'une quelconque des revendications précédentes dans laquelle le matériau précurseur d'hydrogel est formé à partir de précurseurs oligomères.

5. Membrane d'hydrogel selon l'une quelconque des revendications précédentes comprenant :

   un matériau d'hydrogel perméable à l'eau, ledit matériau d'hydrogel comprenant au moins un polyacrylonitrile partiellement hydrolysé ;
   un matériau de renfort à base de polytétrafluoroéthylène expansé poreux ayant une épaisseur de 1 micromètre à 100 micromètres placé dans le matériau d'hydrogel de façon que le matériau d'hydrogel ait une épaisseur par rapport à l'épaisseur du matériau de renfort à base de polytétrafluoroéthylène expansé poreux d'environ 100% à environ 1000% où la membrane présente une résistance à la traction de la matrice d'environ 69 MPa à environ 828 MPa (10 000 psi à environ 120 000 psi).

6. Matériau d'hydrogel renforcé de la revendication 5 dans lequel le matériau d'hydrogel perméable à l'eau comprend également l'un des composés suivants :

   polysulfone sulfonée, polyéther-uréthane, polyéther-uréthaneurée, polyacrylate d'hydroxyéthyle, polyméthacrylate d'hydroxyéthyle, acide polyacrylique/polyéthylèneimine, dextrane et acide hyaluronique.

FIG. 1

FIG. 2

FIG. 3